# EUROPÄISCHE PATENTSCHRIFT

(11) **EP 0 710 268 B1**
(45) Veröffentlichungstag und Bekanntmachung des Hinweises auf die Patenterteilung: **23.04.1997**
(21) Anmeldenummer: 94924745.6
(22) Anmeldetag: 12.07.1994
(51) Int. Cl.: C09K 17/20, E21B 43/02, C09K 17/14

(54) **VERWENDUNG AUSGEWÄHLTER POLYVINYLACETAT-DISPERSIONEN FÜR DIE OBERFLÄCHENVERFESTIGUNG VON SAND UND/ODER ERDREICH**
USE OF SELECTED POLYVINYL ACETATE DISPERSIONS FOR SOLIDIFYING THE SURFACE OF SAND AND/OR EARTH
UTILISATION DE DISPERSIONS DE POLYVINYLACETATES SELECTIONNEES POUR SOLIDIFIER DES SURFACES EN SABLE ET/OU EN TERRE

(30) Priorität: 21.07.1993 DE 4324474
(43) Veröffentlichungstag der Anmeldung: 08.05.1996
(73) Patentinhaber: Henkel Kommanditgesellschaft auf Aktien, 40191 Düsseldorf (DE)
(72) Erfinder: RITTER, Wolfgang, D-42781 Haan (DE); VON TAPAVICZA, Stephan, D-40699 Erkrath 2 (DE); MÜLLER, Heinz, D-40789 Monheim (DE); BÜSCHING, Hartmut, D-31604 Raddestorf (DE)
(86) Internationale Anmeldenummer: EP9402284
(87) Internationale Veröffentlichungsnummer: WO9503372

(56) Entgegenhaltungen:
- GB-A- 906 470
- US-A- 3 887 506
- US-A- 4 072 020
- DATABASE WPI Derwent Publications Ltd., London, GB; AN 82-06810E & JP,A,56 161 462 (KURARAY) 11. Dezember 1981
- PATENT ABSTRACTS OF JAPAN vol. 004, no. 042 (C-005) 3. April 1980 & JP,A,55 016 074 (KYOKADO ENG.) 4. Februar 1980
- DATABASE WPI Derwent Publications Ltd., London, GB; AN 77-33585Y & JP,A,52 040 540 (NIPPON SYNTH. CHEM. K.K) 29. März 1977

## Beschreibung

Die erfindungsgemäße Lehre betrifft die Oberflächenverfestigung von Böden und/oder Sanden - im nachfolgenden auch als Erdreich bezeichnet - durch Auftrag und Eintrag einer wäßrigen Polymerdispersion auf beziehungsweise in die Erdreichoberflächenschichten. Das Wasser des eingetragenen Imprägniermittels trocknet in vergleichsweise kurzer Zeit auf, die zurückbleibende Polymerphase verfestigt die beispielsweise körnige Struktur des imprägnierten Erdreichs, ohne dabei die Wasserdurchlässigkeit dieser Schichten in unzumutbarer Weise zu beeinträchtigen. Eine solche Oberflächenverfestigung beschränkt sich nicht auf Erdreich im engeren Sinne. Auch die entsprechende Stabilisierung von anderen Oberflächenbereichen, die beispielsweise gegen Winderrosion geschützt werden müssen, fällt in die Lehre des erfindungsgemäßen Handelns. Als Beispiele seien hier benannt: Abraumhalden mit oder ohne Auftrag einer Abdeckung durch Mutterboden und dergleichen.

Entwicklung und Praxis beschäftigen sich seit Jahrzehnten mit der auch der Erfindung zugrundeliegenden Konzeption, partikuläre Feststoffe miteinander verklebende synthetische Kunststoffe in Form ihrer wäßrigen Dispersionen beziehungsweise Emulsionen auf die zu verfestigenden Flächen aufzutragen und dort aufzutrocknen. Besondere praktische Bedeutung kommt in diesem Zusammenhang wäßrigen Polyvinylacetat-Dispersionen zu - im nachfolgenden auch als PVAc-Dispersionen bezeichnet. Beispielhaft sei auf die folgenden Veröffentlichungen verwiesen: A. Kullmann et al. in "Archiv für Acker- und Pflanzenbau und Bodenkunde", 22. Band, Heft 11 (1978), Seiten 713 bis 719 (Chemical Abstracts 91 (5):38081u). Neben Polyvinylacetat werden als brauchbare Binder beschrieben: Butadiene-Styrol-Latex, ein Harnstoff/Formaldehyd-Polymer und eine Bitumenemulsion. Die Stabilisierung von Dünensand in entsprechender Weise gegen Regenbewitterung ist Gegenstand der Veröffentlichung D. Gabriels et al. in "Soil Science", Vol 118, No. 5 (1974), Seiten 332 bis 338 (Chemical Abstracts 82 (15):96945d). Auch hier ist ein Bindersystem auf Polyvinylacetatbasis unter den bevorzugten Arbeitsmitteln angegeben. Aus den weiteren weltweit durchgeführten Arbeiten sei lediglich beispielhaft auf einige Patentschriften verwiesen, siehe in diesem Zusammenhang US-A-4072020, US-A-3887506, Chemical Abstracts 85 (21):158730c (= HU-A-11654) sowie ZA-A-7501787.

Der Anforderungs- beziehungsweise Aufgabenkatalog für eine solche Verfestigung der Erdreichoberfläche kann außerordentlich vielgestaltig sein. Ohne Anspruch auf Vollständigkeit sei eine Reihe der in der Praxis geforderten Eigenschaften aufgezählt: Das Material sollte widerstandsfähig wenigstens gegen Fußgängerverkehr sein, es darf durch die jeweils vorliegenden Temperaturen, die Luftfeuchtigkeit und den Regen - für den jeweils beabsichtigten Zeitraum - nicht beeinträchtigt werden, es muß auch gegenüber hohen Windgeschwindigkeiten widerstandsfähig sein. Das aufzutragende Material sollte nicht entflammbar sein und bei Lagerung sowie während und nach der Anwendung keine Feuergefahr oder Explosionsgefahr darstellen. Bei Transport und Verarbeitung sollten möglichst keine außergewöhnlichen Schutzmaßnahmen getroffen oder Schutzkleidung getragen werden müssen. Die ausgehärtete Kunststoffimprägnierung sollte auf keimende Pflanzen, auf wachsende Pflanzen und auf Tiere keine giftige Wirkung ausüben und dabei möglichst farblos oder transparent sein. Unter Berücksichtigung dieser und weiterer Anforderungen kann zum heutigen Wissensstand zusammengefaßt werden:
- 1.: PVAc-Homopolymer-Dispersionen sind grundsätzlich als Bindemittel geeignet. Ohne Mitverwendung von Weichmachern ergeben sie allerdings einen derart spröden Zusammenhalt der imprägnierten Schichten des Erdreichs, daß wesentliche Gebrauchsanforderungen nicht erfüllt werden.
- 2.: Durch Zusatz von unter Normalbedingungen fließfähigen Weichmachern kann der Mangel zu (1) aufgefangen werden. In der Praxis bewährt hat sich als Weichmacher insbesondere das Di-butylphtalat. Damit weichgemachte PVAc-Homopolymerisate ergeben einen festen Zusammenhalt, dieser Weichmacher ist allerdings nicht abbaubar.
- 3.: Innerlich weichgemachte Polymer-Dispersionen (Poly-vinylacetat--co-Di-butylmaleinat) ergeben einen festen Zusammenhalt, sind aber ebenfalls nicht abbaubar.

Die erfindungsgemäße Lehre geht von der Aufgabe aus, PVAc-Homopolymer-Dispersionen für den beschriebenen Einsatzzweck mit Weichmachern auszurüsten, die einerseits das vielgestaltige technische Anforderungsprofil erfüllen, zum anderen aber darüber hinaus bioverträglich sind und insbesondere ihrerseits abgebaut werden können. Zugrunde liegt hier das Fachwissen, daß PVAc-Homopolymere grundsätzlich bioverträglich und abbaubar sind, wenn auch der Abbau dieses Polymeren vergleichsweise langsam vor sich geht. Zur einschlägigen Literatur siehe beispielsweise H. Kastien et al. "Der quantitative mikrobiologische Abbau von Lackkunstharzen und Polymerdispersionen", "farbe + lack", 98. Jahrgang, 7/1992, Seiten 505-508. Zielvorstellung der Erfindung ist damit im engeren Sinne, bisher nicht beschriebene Kombinationen von PVAc-Homopolymer-Dispersionen und bioverträglichen Weichmachern zu schaffen, die das vielgestaltige technische Anforderungsprofil der Erdreichoberflächenbefestigung erfüllen, gleichzeitig aber als Ganzes den natürlichen Abbauprozessen unterliegen. Die dann weiterführende Verfestigung der betroffenen Erdreichflächen kann in an sich bekannter Weise durch zwischenzeitlich stattgefundene Pflanzenwachstumsprozesse stattfinden, so daß die zunächst aufgetragene und unmittelbar wirksame synthetische Befestigung der Erdreichoberfläche durch das jetzt hinreichend weit vorangeschrittene Pflanzenwachstum übernommen wird und letztlich die synthetische Anfangshilfe durch natürliche Abbauprozesse völlig verschwindet.

Biologisch akzeptable Weichmacher für PVAc-Dispersionen sind an sich grundsätzlich bekannt, nicht bekannt ist jedoch ihr Einsatz im Sinne der erfindungsgemäßen Verwendung solcher Kombinationen zur Befestigung von Erdreichoberflächen. Die einschlägige Literatur zur Weichmacher-Modifikation in PVAc-Polymeren bei ihrem Einsatz auf dem hier angesprochenen Gebiet der Oberflächenverfestigung zeigt, daß hinreichend sichere Aussagen zur Erfüllung des vielgestaltigen Anforderungsprofils bei dem Weichmacheraustausch nicht möglich sind. Verwiesen wird auf die Veröffentlichung D.F. Anderson et al., U.S. Nat. Techn. Inform. Serv., AD Rep., No. 732484, Avail. NTIS; Govt. Rep. Announce, (U.S.) 1972, 72 (1), 75 (Chemical Abstracts 76 (24):141689n). Ausgehend von der an sich befriedigenden Kombination von PVAc-Homopolymer mit Di-butylphtalat als Weichmacher wird versucht, mit einer Vielzahl anderer an sich bekannter Weichmacherkomponenten in der Summe befriedigende Produkteigenschaften einzustellen. Schon bezüglich der Grundanforderungen an die hinreichende Elastizität des Filmes gelingt das nur in dem Sonderfall der Verwendung von Weichmachern auf Basis von Oligo-Ethylenglykolderivaten. Alle anderen dort untersuchten Weichmachertypen führen zu einer nicht akzeptablen Versprödung des PVAc-Films.

Entsprechende Arbeitsergebnisse liegen der im nachfolgenden geschilderten Lehre der Erfindung zugrunde. Aus der an sich großen Klasse insbesondere naturstoffbasierter Wertstoffe mit Weichmachereigenschaften haben sich nur drei Vertreter als brauchbare Hilfsmittel im Sinne der erfindungsgemäßen Aufgabenstellung erwiesen.

### Gegenstand der Erfindung

Gegenstand der erfindungsgemäßen Lehre ist dementsprechend die Verwendung von Triestern des Glycerins mit niederen aliphatischen Monocarbonsäuren, die Verwendung von Citronensäuretriestern mit niederen aliphatischen monofunktionellen Alkoholen und/oder die Verwendung von epoxidierten Triglyceriden wenigstens anteilsweise olefinisch ungesättigter Fettsäuren als biologisch abbaubare Weichmacher in wäßrigen Polyvinylacetat-Dispersionen für deren Einsatz zur Oberflächenverfestigung von Sand und/oder Erdreich.

### Einzelheiten zur Erfindung

Drei naturstoffbasierte niedermolekulare Weichmachertypen haben sich für die Erfüllung des erfindungsgemäßen Anforderungsprofils als geeignet erwiesen.

Die erste Gruppe umfaßt Triester des Glycerins mit niederen aliphatischen Monocarbonsäuren. Besonders geeignet sind entsprechende Glycerintriester von aliphatischen Monocarbonsäuren mit 2 bis 6 C-Atomen und insbesondere mit 2 bis 4 C-Atomen im Molekül. Ein besonders wichtiger Vertreter ist hier das Triacetin. Die der Erfindung zugrundeliegenden Arbeiten haben gezeigt, daß schon durch sehr geringe Zugabemengen des Triacetins zum PVAc-Homopolymeren eine für den erfindungsgemäßen Anwendungszweck hinreichende Erweichung des PVAc-Filmes erreicht werden kann, so daß die mit diesem Gemisch getränkten und durch Auftrocknung des ursprünglich mit eingetragenen Wassers verfestigten Sand- beziehungsweise Erdreichformationen nicht verspröden und damit beispielsweise begehbar sind.

Die zweite Gruppe erfindungsgemäß geeigneter Weichmacher ist durch Citronensäuretriester repräsentiert. Dabei kann die Citronensäure als solche, aber auch in der Form der an ihrer Hydroxylgruppe acylierten Variante vorliegen. Als esterbildende Alkohole zur Umsetzung mit den Carboxylgruppen der Citronensäure eignen sich insbesondere monofunktionelle aliphatische Alkohole mit 2 bis 6 C-Atomen und vorzugsweise entsprechende Alkohole mit 2 bis 4 C-Atomen. Sowohl in dieser Stoffklasse wie in der zuvor angegebenen Stoffklasse der Glycerintriester mit aliphatischen Monocarbonsäuren kann durch Wahl der Kettenlänge des jeweils zur Veresterung herangezogenen monofunktionellen Bestandteils Einfluß auf die Flüchtigkeit und damit auf die Siedetemperatur der Weichmacherkomponente genommen werden. Im Falle der hier betroffenen Citronensäureester ist eine weitere Variationsmöglichkeit über die Kettenlänge des gegebenenfalls an die Hydroxylgruppe der Citronensäure gebundenen Acylrestes möglich. Hier kommen entsprechende Reste von monofunktionellen insbesondere gesättigten Carbonsäuren mit 2 bis 10 C-Atomen, gegebenenfalls aber auch Reste entsprechender Säuren mit noch höherer Kohlenstoffzahl in Betracht. Die Lehre der Erfindung eröffnet hier die Möglichkeit, einen möglichen Weichmacherverlust unter Extrembedingungen - beispielsweise bei extremer Sonneneinstrahlung - und damit eine Versprödung der ausgebildeten Filmschichten zu begrenzen.

Die dritte Weichmacherklasse im Sinne des erfindungsgemäßen Handelns ist durch die epoxidierten Triglyceride wenigstens anteilsweise olefinisch ungesättigter Fettsäuren repräsentiert. Die aus praktischen und wirtschaftlichen Gründen wichtigsten Vertreter dieser Klasse sind epoxidiertes Rüböl und epoxidiertes Sojaöl, die als Handelsprodukte beispielsweise von der Anmelderin für die verschiedenartigsten Anwendungszwecke auf den Markt gebracht und vorgeschlagen sind. Gerade an dieser Unterklasse der erfindungsgemäß eingesetzten Weichmacher ist der Auswahl charakter der erfindungsgemäßen Lehre sehr deutlich zu erkennen: Triglyceridester gesättigter und/oder ungesättigter Fettsäuren, insbesondere unter Normalbedingungen als Öle vorliegende entsprechende Triglyceride natürlichen Ursprungs, geben keine hinreichende Weichmacherwirkung in Abmischung mit PVAc-Homopolymeren. In nicht vorhersehbarer Weise wird durch die Epoxidierung wenigstens anteilsweise olefinisch ungesättigter Triglyceride dieser Art und insbesondere durch Epoxidierung des Rüböls ein Weichmacher geschaffen, der dem komplexen Anforderungskatalog entspricht, die hier gestellten Bedingungen erfüllt und gleichzeitig als Naturstoff natürlichen Abbauprozessen unterliegt.

Die zur Einstellung des Anforderungsprofils benötigte Menge an Weichmacher in den erfindungsgemäß verwendeten Arbeitsmitteln ist beschränkt. Im allgemeinen geben Weichmachermengen von etwa 1 bis 15 Gew.-% und vorzugsweise von etwa 3 bis 10 Gew.-% - Gew.-% jeweils bezogen auf die etwa 50 Gew.-%ige PVAc-Homopolymer-Dispersion - hinreichende Ergebnisse. Besonders wichtig können Zusatzmengen im Bereich von etwa 5 bis 8 Gew.-% Weichmacher sein. Hier wird ein bereits angesprochener Vorteil der erfindungsgemäßen Lehre ersichtlich: Ein unter Extrembedingungen beispielsweise der Sonneneinstrahlung eintretender partieller Austrag an Weichmacher wirkt sich nicht unmittelbar negativ auf die Stoffeigenschaften des aufgetrockneten PVAc-Filmes in Abmischung mit der verfestigten Bodenmasse aus. Selbst bei einer vergleichsweise starken Verarmung der Imprägnierung an Weichmacher ist doch immer die hinreichende Flexibilisierung der verfestigten Schicht gewährleistet. Möglicherweise wirkt sich hier die Strukturähnlichkeit des Weichmachermoleküls mit der Struktureinheit des PVAc-Homopolymeren in dem Sinne positiv aus, daß durch eine besonders innige Penetration des Weichmachers in das Polymerenmolekül der angestrebte Effekt auch im Bereich geringer Weichmacherkonzentrationen erhalten bleibt.

Die in der Praxis einzusetzenden PVAc-Dispersionen sind die bekannten wäßrigen Zubereitungen, deren PVAc-Feststoffgehalt beispielsweise im Bereich von ca. 10 bis 65 Gew.-% und vorzugsweise im Bereich von ca. 35 bis 60 Gew.-% liegen kann. In der bisherigen Praxis des Auftrages von wäßrigen PVAc-Dispersionen wird häufig mit entsprechenden Feststoffgehalten im Bereich von 50 bis 60 Gew.-% gearbeitet. Grundsätzlich kann auch im Sinne der erfindungsgemäßen Lehre davon Gebrauch gemacht werden.

In einer besonders bevorzugten Ausführungsform sieht die Erfindung vor, daß auch weitere Zusatzstoffe der erfindungsgemäß ausgewählten wäßrigen Imprägnier- und Bindemittelmassen biologisch abbaubar und damit bioverträglich sind. Hier sieht die Erfindung insbesondere die Mitverwendung von biologisch abbaubaren Schutzkolloiden zur Stabilisierung der wäßrigen PVAc-Dispersionen vor. Geeignete Schutzkolloide sind einerseits Polyvinylalkohol, andererseits aber auch Stärke und/oder wasserlösliche Stärkederivate, wobei die Stärke auch einem partiellen Molgewichtsabbau unterworfen sein kann. Grundsätzlich gilt allerdings insbesondere im Fall der Stärke und/oder wasserlöslichen Stärkederivate als Schutzkolloide, daß durch Einsatz zu großer Mengen dieser wasserlöslichen Komponenten eine Gefährdung der Filmstabilität gegen Errosion durch Beregnung und damit ein zu rascher Filmabbau verbunden sein kann. Es ist dementsprechend erfindungsgemäß bevorzugt, die Einsatzmengen der Schutzkolloide beziehungsweise Emulgatoren derart einzuschränken, daß die hinreichende Festigkeit des PVAc-Überzugs gegen die Bewitterungseinflüsse erhalten bleibt. Üblicherweise liegen hier die Mengen der Schutzkolloide beziehungsweise Emulgatoren bei höchstens etwa 5 Gew.-% und insbesondere im Bereich von etwa 0,5 bis 3 Gew.-% - Gew.-% jeweils bezogen auf PVAc-Feststoff.

Im übrigen kann auch im Rahmen des erfindungsgemäßen Handelns von den technischen Elementen Gebrauch gemacht werden die im einschlägigen Stand der Technik zur Ausbildung entsprechender Oberflächenfilme entwickelt worden sind. Beispielhaft sei hier auf die Mitverwendung von wachstumsfördernden Wirkstoffen, insbesondere Hilfsstoffen mit Düngemittelcharakter und/oder auf die Mitverwendung von bevorzugt feinteiligem partikulärem Feststoffgut in der fließfähigen Zubereitung verwiesen. Im dem zuletzt angesprochenen Fall sieht der Stand der Technik bekanntlich insbesondere die Mitverwendung von feinteiligen Feststoffen auf Naturstoffbasis wie Holzmehl, Strohpartikel, Getreideschalen und dergleichen vor, um auf diese Weise die Entstehung lokaler Durchbruchsstellen zur weitergehenden Förderung des Pflanzenwachstums zu ermöglichen, ohne dabei den Gesamtzusammenhalt der verfestigten Schicht zu gefährden. In an sich bekannter Weise kann der Auftrag der bodenverfestigenden wäßrigen Wirkstoffzubereitung mit dem Auftrag von Pflanzensamen erfolgen. Die entsprechende Ausrüstung des Bodens kann aber auch unabhängig von der Verfestigung vor oder nach dem Auftrag der erfindungsgemäßen wäßrigen Zubereitung auf PVAc-Basis erfolgen. Die aufgetragene Menge der wäßrigen Wirkstoffsuspension wird von einer Mehrzahl von Faktoren bestimmt, lediglich beispielhaft sei hier verwiesen auf die Penetrationsbereitschaft der oberen Erdschicht, auf die angestrebte Zielvorstellung und insbesondere Dauer der Verfestigung und die zu erwartenden witterungsbedingten Einflüsse in dem Zeitraum, in dem der hinreichend sichere Zusammenhalt der verfestigten Oberflächenschichten des Bodens gewährleistet sein soll. Im allgemeinen wird die Eintragstiefe der wäßrigen PVAc-Dispersion in den Boden im Bereich von maximal einigen Zentimetern liegen, wobei üblicherweise Eintragstiefen im Bereich von etwa 0,5 bis 3 cm und insbesondere etwa 1 bis 2 cm hinreichend sind. In vielen Anwendungsfällen ist aber auch schon die Bodenverfestigung in einer Tiefe unter 1 cm voll ausreichend.

### Beispiele

Unter Einsatz einer handelsüblichen PVAc-Dispersion (ca. 50 Gew.-%ig) - Handelsprodukt VP 4239/278 B (Schutzkolloid Polyvinylalkohol) der Firma Cordes - werden Abmischungen mit 5 Gew.-% beziehungsweise 10 Gew.-% - bezogen auf wäßrige Dispersion - der nachfolgend angegebenen Weichmacher hergestellt. Dabei wird wie folgt vorgegangen:

### Herstellen der Dispersionen:

In die Dispersion wird der Weichmacher unter Rühren bei Raumtemperatur zugegeben. Es wird 10 min nachgerührt.

Bedingung: IKA-Rührer mit Flügelrührer, U = 900 min⁻¹

Die weichmacherhaltigen Dispersionen werden zu Filmen aufgezogen und die getrockneten Filme beurteilt.

### Herstellen der Folien:

Die Dispersion-/Weichmachermischung wird in einem Rakel auf eine Teflonplatte ausgezogen (bei den Ansätzen mit Glycerin wird der Film auf Polyethylen gezogen). Bei Raumtemperatur werden die Folien getrocknet.
- Bedingung:: Rakel = 400 µm
Dauer der Trocknung: 4 - 6 h

Die nachfolgenden Weichmacher wurden dabei eingesetzt:
1) Triacetin
2) Acetylbutylricinoleat
3) Rübölfettsäuremethylester
4) Ricinenfettsäuremethylester
5) Glycerin
6) Triethylcitrat
7) Acetyltriethylcitrat
8) Tributylcitrat
9) Rüböl
10) Rübölethylhexylester
11) epoxidiertes Sojaöl (Handelsprodukt EDENOR D81)

Die mit diesen Weichmachern hergestellten Folien werden bezüglich Flexibilität, Wasserlöslichkeit und Kohäsion beurteilt. Die zum Einsatz kommende Dispersionsabmischung wird nach einer Standzeit von jeweils mehr als 14 Tagen auf Stabilität und Homogenität geprüft.

Brauchbare Ergebnisse im Sinne der erfindungsgemäßen Aufgabenstellung werden lediglich beim Einsatz der nachfolgenden Weichmacher erhalten:
1) Triacetin
6) Triethylcitrat
7) Acetyltriethylcitrat
8) Tributylcitrat
11) epoxidiertes Sojaöl

### Im einzelnen gilt dabei:

Die Stabilität und Homogenität der erfindungsgemäßen Dispersionsabmischungen sind sowohl beim Zusatz von 5 Gew.-% Weichmacher als beim Zusatz von 10 Gew.-% Weichmacher nach mehr als 14 Tagen jeweils sehr gut.

Eine Wasserlöslichkeit des aufgetrockneten Filmes ist in keinem Fall gegeben. Die Flexibilität der Filme ist im Fall der erfindungsgemäßen Weichmacher beim Zusatz von 10 Gew.-% in allen Fällen "sehr weich". Bei dem Einsatz von 5 Gew.-% ist im Falle des Acetyltriethylcitrats ebenfalls die Flexibilitätsbeurteilung "sehr weich". Bei dieser Zusatzmenge ist in allen anderen Fällen die Beurteilung der Flexibilität "weich".

Die Kohäsion der Filme ist in allen Fällen sehr gut. Beim Zusatz von 10 Gew.-% der Weichmacher und im Fall des Acetyltriethylcitrats auch beim Zusatz von 5 Gew.-% läßt sich der Film unter Krafteinwirkung dehnen, bevor die Folie reißt. Der Zusatz von 5 Gew.-% der restlichen Weichmacher im Sinne der erfindungsgemäßen Verbindung führt zu einer derartigen Kohäsion, daß der Film nur bei hohem Kraftaufwand reißt.

Mit den wäßrigen PVAc-Dispersionen, die Weichmacher im Sinne der erfindungsgemäßen Definition enthalten, lassen sich Sandschichten bewitterungsstabil und begehungsfest abbinden.

### Anwendungsbeispiele

1) Verfestigung von Sandoberflächen
Mit der vorstehend angegebenen PVAc-Dispersion VP4239/278B wurden - unter Zusatz unterschiedlicher Weichmacher bzw. Weichmacher-Mengen - Versuche zur Oberflächenverfestigung von Sandproben durchgeführt. Es wurden jeweils PVAc-Dispersionen mit den folgenden Zusätzen eingesetzt:
1.1) Ohne Zusatz eines Weichmachers (Vergleichsversuch)
1.2) Mit 2 Gew.-% Triacetin
1.3) Mit 5 Gew.-% Triacetin
1.4) Mit 10 Gew.-% Triacetin
1.5) Mit 10 Gew.-% epoxidiertem Sojaöl (EDENOR D81)
1.6) Mit 10 Gew.-% Dibutylphthalat (Vergleichsversuch).

Die Versuche wurden wie folgt durchgeführt: Es wurden die Oberflächen von jeweils gleichartigen Sandproben mit jeweils gleichen Mengen von 10 Gew.-%igen Lösungen der vorstehend angegebener Dispersionen behandelt. Anschließend wurde die jeweils benötigte Aushärtungszeit bei Umgebungstemperatur (ca. 20 bis 25 °C) ermittelt. Ergebnis: Es wurden keine signifikanten Unterschiede zwischen den einzelnen Proben festgestellt. Alle Proben benötigten eine Aushärtungszeit von mehr als 16 Stunden.
Anhand der ausgehärteten Proben wurden ferner die Wasseraufnahmefähigkeit und die Oberflächenelastizität derselben untersucht und visuell verglichen. Auch hierbei zeigten sich keine signifikanten Unterschiede zwischen den einzelnen Proben.
Die vorstehend geschilderten Testversuche wurden wiederholt, wobei jedoch jeweils eine 5 Gew.-%ige Lösung der angegebenen Dispersionen Verwendung fand. Im Hinblick auf die hierbei jeweils erzielte Oberflächenhärte der einzelnen Proben zeigten diejenigen, die mit Dispersionen mit einem Triacetin-Zusatz erhalten worden waren, ein generell besseres Verhalten, d.h. die Verfestigung der Sandoberflächen war insgesamt stärker. Hinsichtlich der Oberflächenelastizität der mit den Formulierungen gemäß 1.2 bzw. 1.3 (2 Gew.-% bzw. 5 Gew.-% Triacetin-Zusatz) und der mit der Formulierung gemäß 1.4 (10 Gew.-% Triacetin-Zusatz) gewonnenen Proben waren geringfügige Unterschiede feststellbar.
2) Überprüfung von Witterungseinflüssen auf verfestigte Sandoberflächen
Für diese Versuche wurden jeweils die vorstehend angegebenen PVAc-Dispersionen mit einem Zusatz von 5 Gew.-% Triacetin in Form von 10 Gew.-%igen Lösungen eingesetzt. Als Versuchsflächen dienten jeweils Blechschalen, die mit 1500 g Sand in einer Schichtdicke von ca. 3 bis 4 cm gefüllt waren. Dies entspricht einer Oberfläche von ca. 740 cm². Die PVAc-Dispersion wurde jeweils mit einem Pinsel auf die Sandoberflächen aufgetragen. Die eingesetzte Menge betrug jeweils ca. 150 g und entsprach somit ca. 2000 g Ausgangs-Dispersion pro Quadratmeter Sandoberfläche. Die so behandelten Sandproben wurden nach einer Aushärtungszeit von 16 Stunden bei Umgebungstemperatur (20 bis 25 °C) wie folgt gelagert:
2.1) 4 Tage bei Umgebungstemperatur im Labor,
2.2) 12 Tage im Außenbereich mit künstlicher Bewässerung, hierbei war dem Sand zur Hälfte Mutterboden beigemischt,
2.3) 9 Tage im Außenbereich, mit Regentagen,
2.4) 4 Tage im Klimaschrank mit Umluft bei 10 °C,
2.5) 4 Tage im Trockenschrank ohne Umluft bei 40 °C.

Ergebnis: Die beim Versuch 2.1 resultierende Sandoberfläche war bei stärkerem Druck nachgiebig, d.h. elastischer. Die im Außenbereich gelagerten Proben gemäß Versuch 2.2 bzw. 2.3 wiesen nach Testende, trotz Regeneinwirkung, künstlicher Bewässerung und leichter Neigung während der Lagerung, keine merklichen Härteunterschiede auf; die Aushärtung der Sandoberflächen konnte generell als sehr gut bezeichnet werden. Bei Versuch 2.4 wurde ein ungleichmäßiges Aushärten der Sandoberfläche beobachtet; es zeigten sich Stellen ohne ausgehärtete Oberfläche. Dieser Effekt ist auf die bei diesem Versuch im Klimaschrank herrschende Umluft zurückzuführen, da diese eine sehr schnelle Trocknung der Sandoberfläche bedingt. Demgegenüber zeigte die Probe gemäß Versuch 2.5 (ohne Umluft) keinerlei Härteunterschiede der Sandoberfläche; vielmehr entsprach das hierbei erzielte Ergebnis denjenigen der Versuche 2.2 und 2.3.
3) Weitere praxisrelevante Versuche
Für diese Versuche wurde wiederum die vorstehend angegebene PVAc-Dispersion mit einem Zusatz von 5 Gew.-% Triacetin in Form einer 10 Gew.-%igen Lösung eingesetzt.
3.1) Begrünung
Analog Versuch 2 wurden Sandproben gefertigt, denen jedoch zur Hälfte Mutterboden beigemischt war (Verhältnis Sand : Mutterboden = 1 : 1). Diese Sandproben wurden mit einer PVAc-Dispersion behandelt, die zusätzlich Grassamen enthielt. Als Blindwert dienten hierbei Sandproben mit Grassamen, die nicht mit PVAc-Dispersion behandelt waren.
Ergebnis: Es zeigten sich keinerlei nennenswerte Unterschiede bezüglich des Graswachstums, der Dichte des Bewuchses und der Grasfarbe.
3.2) Vinylacetat-Gehalt in Eluaten
In einer Filternutsche wurde ein Sandbett aufgeschichtet, welches anschließend mit PVAc-Dispersion behandelt wurde. Die Aushärtungszeit betrug 16 Stunden bei Umgebungstemperatur (20 bis 25 °C). Über einen Zeitraum von 10 Tagen wurde anschließend pro Tag eine definierte Wassermenge auf das Sandbett gegeben und die jeweiligen Eluatproben (Probe 1 bis Probe 10) aufgefangen. Als Blindwert diente hierbei ein Eluat, das über ein entsprechendes unbehandeltes Sandbett gewonnen wurde.
Probe 9 (d.h. Eluatprobe am 9. Tag) wurde durch Headspace-GC untersucht, wobei diese Probe zur Quantifizierung mit Vinylacetat-Standard aufgestockt wurde. Der in dieser Probe ermittelte Vinylacetat-Gehalt betrug weniger als 1 ppm.
3.3) CSB- und TOC-Werte in Eluaten
In einigen der vorstehend beschriebenen Eluate wurden die Werte des chemischen Sauerstoffbedarfs (CSB-Werte) und des organisch gebundenen Kohlenstoffs (TOC-Werte) bestimmt. Die Bestimmung der CSB-Werte erfolgte gemäß DIN 38409H41/1, die der TOC-Werte gemäß DIN 38409 H3; bis zur Bestimmung wurden die Eluatproben im Kühlschrank (4 °C) aufbewahrt. Ergebnis:

| | CSB[mg/l] | TOC[mg/l] |
|---|---|---|
| Probe 1 | 92,6 | 31,4 |
| Probe 10 | 4,0* | 2,7 |
| Probe 2 bis 8 (Durchschnittswert der vereinigten Proben) | - | 1,8 |
| Blindwert 1 | 4,0* | 3,8 |
| Blindwert 10 | 1,0* | 1,3 |

| | | |
|---|---|---|
| * bedeutet: Die Werte liegen im Fehlerbereich der Methoden. | | |

Die mit Probe 1 ermittelten Werte sind offensichtlich auf den Umstand zurückzuführen, daß noch keine hinreichende Aushärtung erfolgt war; sie stellen jedoch durchaus keine kritischen Werte dar. Insgesamt gesehen können die ermittelten Werte als sehr positiv bezeichnet werden. Im Hinblick hierauf entfiel die Bestimmung des CSB-Wertes der vereinigten Proben 2 bis 8.
3.4) Außenversuche
Für die Außenversuche wurden Flächen von ca. 30 m² und einer Neigung von ca. 60 ° aus aufgeschüttetem Mutterboden sowie aus aufgeschüttetem Sand mit einer auf 1 : 8 verdünnten PVAc-Dispersion (5 Gew.-% Triacetin-Zusatz) mit Hilfe einer Spritzeinrichtung behandelt. Die Applikation mit ca. 2 kg Dispersion pro Quadratmeter Fläche erfolgte an einem November-Tag gegen 15.00 Uhr; die Beurteilung erfolgte nach Verfestigung am folgenden Tag gleichfalls gegen 15.00 Uhr. Ergebnis: Trotz ungünstiger Witterungsbedingungen - Bodennebel am Morgen, Temperaturen in der Nacht bei ca. 4 bis 6 °C - resultierte eine ausgezeichnete Bodenverfestigung, welche auch nach einigen Tagen noch in der gleichen Weise gegeben war.

## Patentansprüche

1. Verwendung von Triestern des Glycerins mit niederen aliphatischen Monocarbonsäuren, Citronensäuretriestern mit niederen aliphatischen monofunktionellen Alkoholen und/oder epoxidierten Triglyceriden wenigstens anteilsweise olefinisch ungesättigter Fettsäuren als biologisch abbaubare Weichmacher in wäßrigen Polyvinylacetat-Dispersionen für deren Einsatz zur Oberflächenverfestigung von Sand und/oder Erdreich.

2. Ausführungsform nach Anspruch 1, dadurch gekennzeichnet, daß Glycerintriester von aliphatischen Monocarbonsäuren mit 2 bis 6, vorzugsweise 2 bis 4 C-Atomen im Molekül, und insbesondere Triacetin als Weichmacher verwendet werden.

3. Ausführungsform nach Anspruch 1, dadurch gekennzeichnet, daß Citronensäuretriester mit aliphatischen monofunktionellen Alkoholen mit 2 bis 6 C-Atomen, vorzugsweise 2 bis 4 C-Atomen, als Weichmacher verwendet werden.

4. Ausführungsform nach Anspruch 1, dadurch gekennzeichnet, daß epoxidiertes Rüböl und/oder epoxidiertes Sojaöl als Weichmacher verwendet wird.

5. Ausführungsform nach Ansprüchen 1 bis 4, dadurch gekennzeichnet, daß die Weichmacher den wäßrigen Polyvinylacetat-Dispersionen zugesetzt und dabei in Mengen von etwa 1 bis 15 Gew.-%, vorzugsweise von etwa 3 bis 10 Gew.-% - Gew.-% jeweils bezogen auf eine ca. 50 Gew.-%ige wäßrige Polyvinylacetat-Dispersion - verwendet werden.

6. Ausführungsform nach Ansprüchen 1 bis 5, dadurch gekennzeichnet, daß die wäßrigen Polyvinylacetat-Dispersionen mit Feststoffgehalten im Bereich von ca. 10 bis 65 Gew.-%, vorzugsweise im Bereich von ca. 35 bis 60 Gew.-%, verwendet werden.

7. Ausführungsform nach Ansprüchen 1 bis 6, dadurch gekennzeichnet, daß mit biologisch abbaubaren Schutzkolloiden stabilisierte wäßrige Polyvinylacetat-Dispersionen zum Einsatz kommen, wobei Polyvinylalkohol und/oder Stärke und/oder wasserlösliche Stärkederivate bevorzugte Emulgatoren sein können, dabei vorzugsweise deren Einsatzmengen aber derart eingeschränkt sind, daß die hinreichende Festigkeit des Polyvinylacetatüberzuges auf dem Boden gegen Bewitterungseinflüsse erhalten bleibt.

8. Ausführungsform nach Ansprüchen 1 bis 7, dadurch gekennzeichnet, daß die biologisch abbaubaren Schutzkolloide in Mengen bis etwa 5 Gew.-%, vorzugsweise in Mengen von etwa 0,5 bis 3 Gew.-% - Gew.-% bezogen auf Polyvinylacetat-Feststoff - verwendet werden.

## Claims

1. The use of triesters of glycerol with lower aliphatic monocarboxylic acids, citric acid triesters with lower aliphatic monohydric alcohols and/or epoxidized triglycerides of at least partly olefinically unsaturated fatty acids as biodegradable plasticizers in aqueous polyvinyl acetate dispersions for their use for the surface stabilization of sand and/or soil.

2. The use claimed in claim 1, characterized in that glycerol triesters of aliphatic monocarboxylic acids containing 2 to 6 and preferably 2 to 4 carbon atoms in the molecule, more particularly triacetin, are used as plasticizers.

3. The use claimed in claim 1, characterized in that citric acid triesters with aliphatic monohydric alcohols containing 2 to 6 carbon atoms and preferably 2 to 4 carbon atoms are used as plasticizers.

4. The use claimed in claim 1, characterized in that epoxidized rapeseed oil and/or epoxidized soybean oil is/are used as plasticizer(s).

5. The use claimed in claims 1 to 4, characterized in that the plasticizers are added to the aqueous polyvinyl acetate dispersions and are used in quantities of around 1 to 15% by weight and preferably in quantities of around 3 to 10% by weight, based on an approximately 50% by weight aqueous polyvinyl acetate dispersion.

6. The use claimed in claims 1 to 5, characterized in that the aqueous polyvinyl acetate dispersions are used with solids contents of around 10 to 65% by weight and preferably 35 to 60% by weight.

7. The use claimed in claims 1 to 6, characterized in that aqueous polyvinyl acetate dispersions stabilized with biodegradable protective colloids are used, polyvinyl alcohol and/or starch and/or water-soluble starch derivatives being preferred emulsifiers, although the quantities in which they are used are preferably limited to such an extent that the polyvinyl acetate coating on the soil remains sufficiently resistant to the effects of weather.

8. The use claimed in claims 1 to 7, characterized in that the biodegradable protective colloids are used in quantities of up to about 5% by weight and preferably in quantities of about 0.5 to 3% by weight, based on polyvinyl acetate solids.

## Revendications

1. Utilisation de triesters du glycérol avec des acides monocarboxyliques aliphatiques inférieurs, de triesters citriques avec des alcools monofonctionnels aliphatiques inférieurs et/ou de triglycérides époxydés d'acides gras à insaturation oléfinique au moins partielle, à titre de plastifiant biodégradable dans des dispersions aqueuses d'acétate de polyvinyle pour leur mise en oeuvre à des fins de consolidation superficielle de sable et/ou de terroir.

2. Forme de réalisation selon la revendication 1, caractérisée en ce qu'on utilise des triesters de glycérol d'acides monocarboxyliques aliphatiques contenant de 2 à 6 atomes de carbone, de préférence de 2 à 4 atomes de carbone dans la molécule et en particulier, de la triacétine, à titre de plastifiant.

3. Forme de réalisation selon la revendication 1, caractérisée en ce qu'on utilise des triesters citriques avec des alcools monofonctionnels aliphatiques contenant de 2 à 6 atomes de carbone, de préférence de 2 à 4 atomes de carbone, à titre de plastifiant.

4. Forme de réalisation selon la revendication 1, caractérisée en ce qu'on utilise de l'huile de navette époxydée et/ou de l'huile de soja époxydée, à titre de plastifiant.

5. Forme de réalisation selon les revendications 1 à 4, caractérisée en ce qu'on ajoute le plastifiant aux dispersions aqueuses d'acétate de polyvinyle et en l'occurrence, dans des quantités d'environ 1 à 15% en poids, de préférence d'environ 3 à 10% en poids, les pour cent en poids étant respectivement rapportés à une dispersion aqueuse d'acétate de polyvinyle à environ 50% en poids.

6. Forme de réalisation selon les revendications 1 à 5, caractérisée en ce qu'on utilise les dispersions aqueuses d'acétate de polyvinyle avec des teneurs en substances solides dans le domaine d'environ 10 à 65% en poids, de préférence dans le domaine d'environ 35 à 60% en poids.

7. Forme de réalisation selon les revendications 1 à 6, caractérisée en ce qu'on met en oeuvre des dispersions aqueuses d'acétate de polyvinyle stabilisées avec des colloïdes de protection biodégradables, des émulsifiants préférés pouvant être l'alcool polyvinylique et/ou l'amidon et/ou des dérivés hydrosolubles de l'amidon; toutefois, les quantités de mise en oeuvre sont de préférence soumises à une limitation telle que l'on maintient la résistance suffisante du revêtement d'acétate de polyvinyle sur le sol contre les influences atmosphériques.

8. Forme de réalisation selon les revendications 1 à 7, caractérisée en ce qu'on utilise les colloïdes de protection biodégradables dans des quantités allant jusqu'à environ 5% en poids, de préférence dans des quantités d'environ 0,5 à 3% en poids, les pour cent en poids étant rapportés à la teneur de l'acétate de polyvinyle en substances solides.
